# EUROPEAN PATENT APPLICATION

(11) **EP 4 202 881 A1**
(43) Date of publication of application: **28.06.2023**
(21) Application number: 21217489.0
(22) Date of filing: 23.12.2021
(51) Int. Cl.: G08B 21/16

(54) **AN ALARM SYSTEM AND METHOD THEREIN FOR DETECTING GAS LEAKAGE FROM A VEHICLE**

(71) Applicant: VOLVO TRUCK CORPORATION, 405 08 Göteborg (SE)
(72) Inventor: MAITRE, Julien, 38200 Chuzelles (FR)
(74) Representative: Zacco Sweden AB

(57) **Abstract**

An alarm system for detecting a gas leakage from a vehicle (10, 20, 30) is provided. The alarm system comprises a control unit (110) and one or more gas leakage sensors (121-124) configured to be temporarily arranged on or at the vehicle (10, 20, 30). The control unit (110) is arranged to obtain information indicating locations (121a-124a) of the one or more gas leakage sensors (121-124) while temporarily arranged on or at the vehicle (10, 20, 30). The control unit is also arranged to identify, upon generate a warning alert signal in the alarm system, the location (121a-124a) of a gas leakage sensor (121-124) based on the obtained information as the gas leakage sensor (121-124) detects a gas leakage.

## Description

### TECHNICAL FIELD

Embodiments herein relate in general to detection of vehicle gas leakage. In particular, embodiments herein relate to alarm system and a method therein for detecting a gas leakage from a vehicle. Also, embodiments herein also relate to a computer program product and a carrier.

### BACKGROUND

Upon performing maintenance or repairs on fuel-cell vehicles, hydrogen vehicles or other vehicles using a flammable gas, there is always a risk of being exposed to an explosion due to hydrogen or other gases leaking from the vehicle. This risk may be present to maintenance personnel both within and close to the workshop, but also when performing maintenance or repairs at a remote site, e.g. a road-side stop or an accident site. In some cases, the gas leakage may also exist before the maintenance of the vehicle is started, e.g. the vehicle may already be leaking gas but no one has noticed it yet. In other cases, the gas leakage may be created by a maintenance or repair technician when manipulating hardware elements of the hydrogen or gas system, or when the maintenance or repair technician manipulates other hardware elements close to the hydrogen or gas system which may cause disturbances and shaking that may trigger a gas leakage. Either way, when a gas leakage occurs it is crucial for safety reasons that the maintenance or repair technicians, and/or workshop personnel, are warned immediately as a gas leakage occurs in order to be able to get away from the gas leakage as soon as possible.

Hence, there is a need for an alarm system that is capable of detecting and warning maintenance or repair technicians, and/or workshop personnel, about a gas leakage as in a quick and easy manner.

### SUMMARY

It is an object of embodiments herein to provide an alarm system and method therein, along with computer program products and carrier, for detecting a gas leakage from a vehicle that seeks to mitigate, alleviate, or eliminate all or at least some of the above-discussed drawbacks of presently known solutions.

According to a first aspect of embodiments herein, the object is achieved by an alarm system for detecting a gas leakage from a vehicle. The alarm system comprises a control unit and one or more gas leakage sensors configured to be temporarily arranged on or at the vehicle. The control unit is arranged to obtain information indicating locations of the one or more gas leakage sensors while temporarily arranged on or at the vehicle. The control unit is also arranged to identify, upon generate a warning alert signal in the alarm system, the location of a gas leakage sensor based on the obtained information as the gas leakage sensor detects a gas leakage.

By providing a set of movable gas leakage sensors being connected to the same alarm system and capable of indicating their temporary locations on or at a vehicle, the alarm system is able to immediately identify location of the gas leakage, or in some cases the vehicle having the gas leakage, upon generating an alarm signal. This means that an earlier and more accurate gas leak warnings may be given to maintenance or repair technicians and/or workshop personnel working on, or in the vicinity of, a vehicle in which a gas leakage has occurred. Hence, an improved detection and warning of vehicle gas leakages is achieved.

In some embodiments, the control unit may be further arranged to indicate the location of the gas leakage sensor in the warning alert signal in the alarm system. This means that the actual alert signal is able to comprise information indicating the location of the gas leakage sensor that has detected a gas leakage. For example, the alarm signal may comprise a pre-recorded or generated voice message indicating the location of the gas leakage sensor, e.g. "Gas leakage detected in parking lot #3", "Gas leakage detected in the front of the vehicle", etc.

In some embodiments, the control unit may be arranged to establish a wireless connection with the one or more gas leakage sensors. The location of each of the one or more gas leakage sensors once temporarily arranged on or at the vehicle may be determined by each of the one or more gas leakage sensors, for example, via wireless communications (e.g. WiFi, Bluetooth, 3G/4G/5G/6G), GNSS/GPS/Galileo signalling or other location techniques within a wireless network. The determined locations may then be reported to the control unit once or repeatedly by each of the one or more gas leakage sensors. This may, for example, be used to locate the vehicle in parking lot outside a workshop or in a working bay inside the workshop. The control unit may here, for example, be preconfigured with the locations of the parking lots or working bay in order to match the location received from the one or more gas leakage sensors thereto.

According to some embodiments, the control unit may further be arranged to retrieve the information from stored information or receive the information from the one or more gas leakage sensors using the established wireless connection at start-up, on demand, at determined intervals, and/or continuously in real-time using the established wireless connection. The former means that the control unit may be pre-configured with the locations of each of the one or more gas leakage sensors once temporarily arranged on or at the vehicle and retrieve/pull that information from the pre-configuration, e.g. from a memory. This may, for example, be useful when performing road-side or accident maintenance or repairs in that a number of gas leakage sensor may be temporarily arranged to different predetermined locations on or at the vehicle. For example, according to one exemplary setup, a gas leakage sensor #1 may be configured in the control unit to be located at the front of the vehicle, gas leakage sensor #2 may be configured in the control unit to be located close to the front tank valve or fuel-cell of the vehicle, gas leakage sensor #3 may be configured in the control unit to be located at the middle of the vehicle, gas leakage sensor #4 may be configured in the control unit to be located close to the back tank valve or fuel-cell of the vehicle, gas leakage sensor #5 may be configured in the control unit to be located at the back of the vehicle, etc. In this case, according to some embodiments, the one or more gas leakage sensors may be marked to be easily identified with a certain location by maintenance or repair technicians, such as, writing, shapes or colour coding.

Further, in some embodiments, the stored information in the control unit may comprise pre-set, scanned or manually inputted information indicating the locations of the one or more gas leakage sensors. This means that there may be several different ways to configure the control unit and the one or more gas leakage sensors. For example, each of the one or more gas leakage sensors may comprise a bar code that when scanned allow an operator of the control unit to set a location for the scanned gas leakage sensor. For example, a blue gas leakage sensor #3 is associated to the vehicle B-25667 which is in the repair bay #5.

In some embodiments, the one or more gas leakage sensors may be configured to be temporarily arranged on or at the vehicle by a detachable or releasable arrangement. This allows the one or more gas leakage sensors to be easily positioned on or at the vehicle at various different locations that may be of interest for determining possible gas leakages. For example, a gas leakage sensor may routinely and easily be placed on or near a gas tank of a vehicle as the vehicle is parked outside a workshop or maintenance station while waiting to be serviced in a working bay inside the workshop building. This may ensure that no vehicle enters the workshop building having a gas leakage. Here, according to some embodiments, the detachable or releasable arrangement of each of the one or more gas leakage sensor may comprise one or more of: a magnetic retention means, a suction retention means, or a fastening means. This provide different flexible ways of temporarily arrange, attach or mount the one or more gas leakage sensors on or at a vehicle. For example, the magnetic retention means may be suitable for attachment to metallic surfaces, while the suction retention means may be suitable for attachment to plastic or similar smooth non-metallic surfaces. The fastening means, e.g. a screw or bolt, meanwhile may be suitable for more fix locations (e.g. on a wall in a workshop, at a parking lot, etc.). Although, the fastening means, e.g. a clamp, may also allow for a more flexible attachment (e.g. on a flexible fuel hose, etc.).

In some embodiments, the detected gas leakage is vehicle fuel gas, wherein the vehicle fuel gas is one of: Compressed Natural Gas, CNG; Liquid Natural Gas, LNG; Liquefied Petroleum Gas, LPG; or Hydrogen, H₂.

According to a second aspect of embodiments herein, the object is achieved by a method in an alarm system for detecting a gas leakage from a vehicle. The alarm system comprises a control unit and one or more gas leakage sensors configured to be temporarily arranged on or at the vehicle. The method comprise obtaining information indicating locations of the one or more gas leakage sensors while temporarily arranged on or at the vehicle. The method also comprise identifying, upon generate a warning alert signal in the alarm system, the location of a gas leakage sensor based on the obtained information as the gas leakage sensor detects a gas leakage. In some embodiments, the method may comprise indicating the location of the gas leakage sensor in the warning alert signal in the alarm system.

In some embodiments, the method may comprise establishing a wireless connection with the one or more gas leakage sensors. According to some embodiments, the method may comprise retrieving the information from stored information or receiving the information from the one or more gas leakage sensors using the established wireless connection at start-up, on demand, at determined intervals, and/or continuously in real-time using the established wireless connection. Here, in some embodiments, the stored information in the control unit comprises pre-set, scanned or manually inputted information indicating the temporary locations of the one or more gas leakage sensors.

According to a third aspect of the embodiments herein, the object is achieved by a computer program comprising instructions which, when executed in a processing circuitry, cause the processing circuitry to carry out the methods described above. According to a fourth aspect of the embodiments herein, the object is achieved by a carrier containing the computer program described above, wherein the carrier is one of an electronic signal, optical signal, radio signal, or computer-readable storage medium. According to a sixth aspect of the embodiments herein, the object is achieved by a vehicle comprising a processing unit according to the embodiments described above.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a side view of a vehicle,
- Fig. 2: is a schematic illustration of an alarm system comprising a control unit and gas leakage sensors temporarily arranged on or at a vehicle according to some embodiments,
- Fig. 3: is a schematic illustration of a building/parking lot comprising an alarm system comprising a control unit and gas leakage sensors temporarily arranged on or at a vehicle according to some embodiments,
- Fig. 4: is a flowchart illustrating a method in an alarm system according to some embodiments,
- Fig. 5: is a block diagram depicting a control unit in an alarm system according to some embodiments,
- Fig. 6: is a block diagram depicting a gas leakage sensor in an alarm system according to some embodiments.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description. It is to be understood that the present invention is not limited to the embodiments described herein and illustrated in the drawings; rather, the skilled person will recognize that many changes and modifications may be made within the scope of the appended claims.

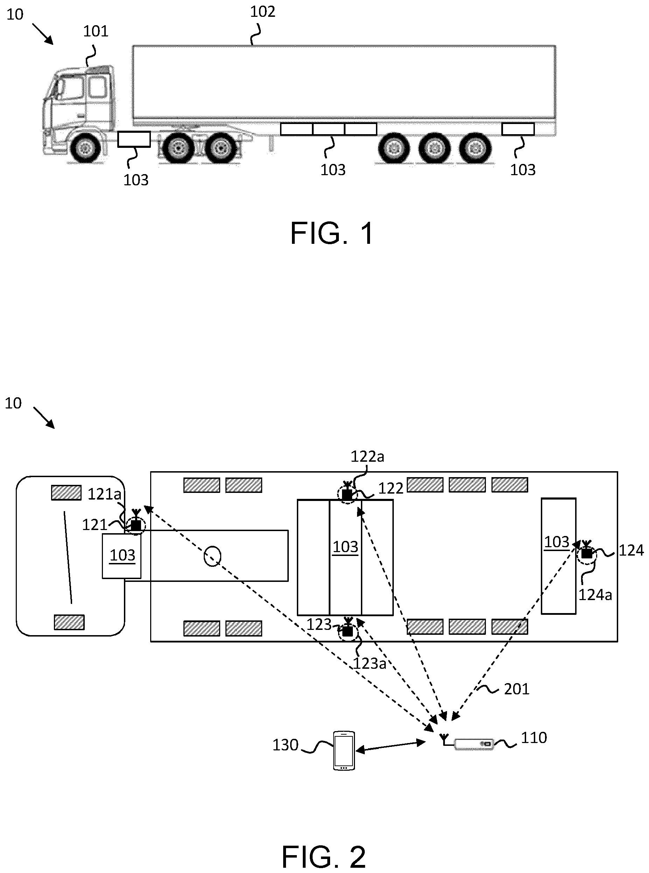

**Fig. 1** illustrates an example of a **vehicle 10**. In this case, the vehicle 10 is exemplified as a heavy-duty vehicle combination for cargo transport. The vehicle 10 exemplified in Fig. 1 comprises a **truck or towing vehicle 101** configured to tow a **trailer unit 102** in a known manner, e.g., by a fifth wheel connection. Herein, a heavy-duty vehicle may be considered to be a vehicle designed for the handling and transport of heavier objects or large quantities of cargo. The vehicle 10 also comprises a number of **power modules 103**, such as, e.g. batteries, fuel cells or hydrogen/gas tanks. It should be noted although a heavy-duty vehicle is exemplified and described in Fig. 1, the embodiments disclosed herein are also applicable for use in any electrical/ hydrogen/gas powered vehicle. Hence, the embodiments herein should not be considered limited to a particular type of vehicle, but should also be considered applicable in other types of vehicles.

As part of developing the embodiments described herein, it has been realized that there are several different ways to detect a gas leak from a vehicle today.

For example, there are gas leakage sensors that are hand-held and portable by a maintenance or repair technician. However, one disadvantage of having a hand-held portable gas leakage sensor at a remote site is that when performing repairs on longer vehicles, such as, e.g. heavy-duty vehicle combination comprising both truck and trailer(s), the gas leakage may not occur exactly where the maintenance or repair technician is currently located and operating the hand-held portable gas leakage sensor. Instead, the gas leakage may occur elsewhere on the vehicle, e.g. in the front or back of the vehicle or trailer, and being too far away from the hand-held portable gas leakage sensor for the sensor to detect the gas leakage. In this case, the maintenance or repair technician may not be warned about the gas leakage at all or too late.

According to another example, there are gas leakage sensors that are affixed and permanently attached at suitable locations, e.g. on-wall sensors, within a workshop. However, these fixed location sensors normally also suffers from being too far away from the actual gas leakage on the vehicle. This means that the maintenance or repair technicians and/or workshop personnel will only notice the gas leakage after it has happened at the vehicle level, and thus may lose precious seconds or minutes for the evacuation. Furthermore, in case of having several vehicle in a multiple-bay workshop, it may in this case also be difficult to identify which of the vehicles that is leaking gas.

In a further example, the vehicle itself may be equipped with built-in hydrogen or gas sensors. However, in these cases the built-in gas leakage sensors may be of different brands or models that does not provide a sufficient alarm for all maintenance or repair technicians and/or workshop personnel that needs to be warned. For example, some maintenance or repair technicians and/or workshop personnel may be located inside a building next to the vehicle and not hear the alarm of the built-in gas leakage sensors. It should also be added that most built-in gas leakage sensors are intended to alert driver of the vehicle when located inside the vehicle. In some cases, a vehicle may also be fitted with colour-changing tape on suitable parts of the vehicle for indicating a gas leakage. However, these are normally slow in changing colour and may not be easy to notice.

The above mentioned disadvantages are addressed by the embodiments described herein with reference to Figs. 2-6.

**Fig. 2** shows a top-side view of the vehicle 10, as well as, an alarm system comprising a **control unit 110** and one or more **gas leakage sensors 121, 122, 123, 124** configured to be temporarily arranged on or at the vehicle 10 according to some embodiments. In some embodiments, the control unit 110 may also be arranged to communicate with a **user device 130**. The user device 130 may, for example, be a handheld mobile device or laptop with wireless communications capabilities.

Here, in this exemplary scenario, a maintenance or repair technician may arrive at the vehicle 10 at a remote site, such as, a road-side stop or accident site, where the vehicle 10 has stopped and is in need of maintenance or repairs. In this case, the control unit 110 and the one or more gas leakage sensors 121, 122, 123, 124 may suitable be portably carried by the maintenance or repair technician as he approaches the vehicle 10 at the remote site. Size-wise the control unit 110 and the one or more gas leakage sensors 121, 122, 123, 124 may preferably made to fit into a brief case or other suitable carry bag to allow for easy mobility. Upon arriving at the vehicle 10, the maintenance or repair technician may turn on or start up the alarm system, i.e. the control unit 110 and the one or more gas leakage sensors 121, 122, 123, 124. After the control unit 110 and the gas leakage sensors 121, 122, 123, 124 has been turned on and the control unit 110 has established communication with each of the one or more gas leakage sensors 121, 122, 123, 124, the maintenance or repair technician may begin positioning a number of the one or more gas leakage sensors 121, 122, 123, 124 onto or at the power modules 103 of the vehicle 10. The number of the one or more gas leakage sensors 121, 122, 123, 124 and their individual locations onto or at the power modules 103 of the vehicle 10 may preferably be selected to enable possible gas leakage detection from any of the power modules 103 of the vehicle 10. For example, the locations of the one or more gas leakage sensors 121, 122, 123, 124 may preferable have suitable spatial separation along the vehicle 10 such that each location may be well-defined, e.g. "front of the vehicle" for gas leakage sensors 121, "right side of the vehicle" for gas leakage sensor 122, "left side of the vehicle" for gas leakage sensor 123, and "back of the vehicle" for gas leakage sensor 124 in Fig. 2. Here, it should be noted that the location of and the number of used gas leakage sensor of the one or more gas leakage sensors 121, 122, 123, 124 will likely depend on the number of power modules 103 and their distribution along the vehicle 10. In some embodiments, the locations of each of the one or more gas leakage sensors 121, 122, 123, 124 may be pre-set or configured in control unit 110, such that the maintenance or repair technician always positions the same gas leakage sensor 121, 122, 123, 124 at the same location on a vehicle 10. In some cases, each of the one or more gas leakage sensor 121, 122, 123, 124 may be color-coded or marked with its intended location on the vehicle 10 in order to assist the maintenance or repair technician in positioning each of the one or more gas leakage sensor 121, 122, 123, 124 at its intended location on the vehicle 10.

Each of the one or more gas leakage sensors 121, 122, 123, 124 may be arranged to transmit a signal 201 to the control unit 110 upon detecting a gas leakage, e.g. detecting a concentration of gas that is above a determined threshold level. The signal 201 indicate to the control unit 110 that the gas leakage sensor 121, 122, 123, 124 has detected a gas leakage. Upon receiving the signal 201 from any of the one or more gas leakage sensors 121, 122, 123, 124, the control unit 110 is arranged to generate an alarm signal and identify the location of the gas leakage sensor 121, 122, 123, 124 that has detected the gas leakage. This alarm signal may further indicate the identified location of the gas leakage sensor 121, 122, 123, 124. For example, a pre-recorded voice message and/or a display may announce the location of the gas leakage sensor 121, 122, 123, 124 and that it has detected a gas leakage, e.g. *"Gas leakage detected on the right side of the vehicle*" or presenting visual information on the display indicating that a gas leakage has been detected on the right side of the vehicle 10.

In some embodiments, the control unit 110 may also be arranged indicate to the user device 130 that a gas leakage has been detected by one or more of the gas leakage sensors 121, 122, 123, 124. This indication may further also comprise the identified location of the gas leakage sensor 121, 122, 123, 124. This enables the user device 130 to also generate an alarm signal. In some embodiments, the user device 130 may indicate the identified location of the gas leakage sensor 121, 122, 123, 124. For example, the user device 130 may have a pre-recorded voice message and/or a display announce the location of the gas leakage sensor 121, 122, 123, 124 and that it has detected a gas leakage, e.g. *"Gas leakage detected on the right side of the vehicle*" or presenting visual information on the display indicating that a gas leakage has been detected on the right side of the vehicle 10.

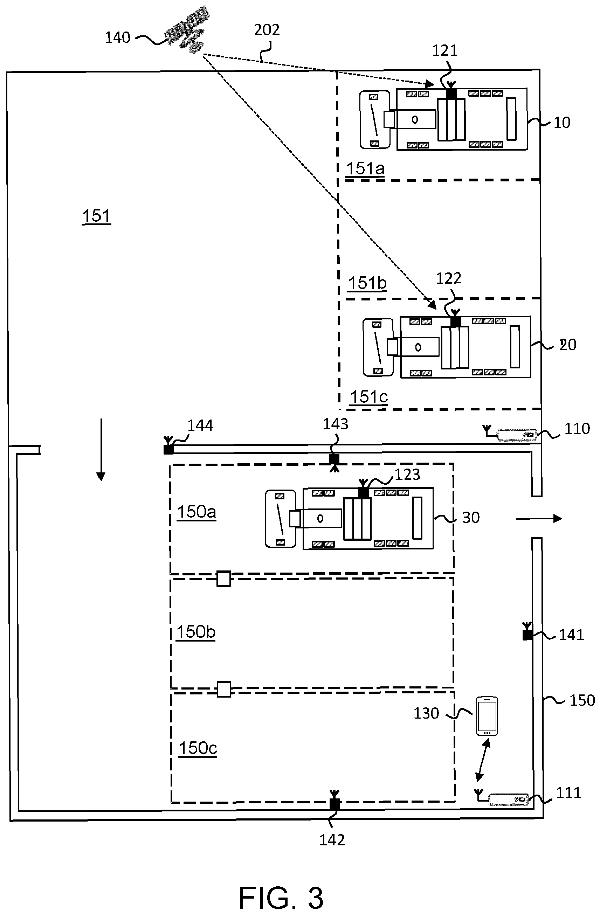

**Fig. 3** shows a schematic illustration of a **workshop 150** and a **parking lot 151** comprising an alarm system having a control unit 110 and gas leakage sensors 121, 122, 123 temporarily arranged on or at a vehicle 10 or any of the **additional vehicles 20, 30** according to some embodiments. In this example, the alarm system may further comprise an **additional control unit 111** and **additional gas leakage sensors 141, 142, 143, 144**. The workshop 150 may comprise any number of **working bays 150a, 150b, 150c**, while the parking lot 151 may comprise a number of **parking spots 151a, 151b, 151c**.

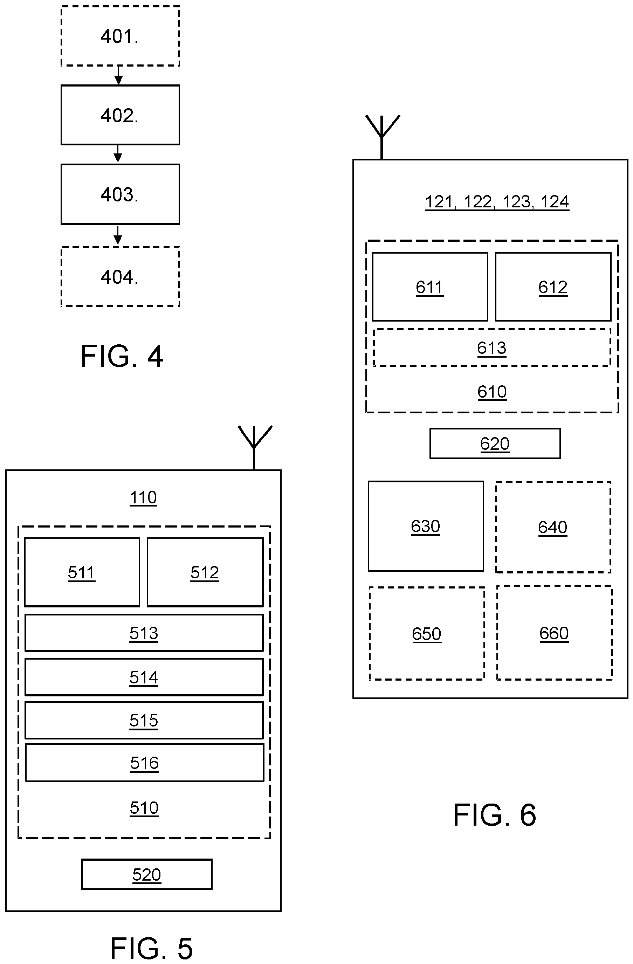

Here, in this exemplary scenario, the vehicle 10 is parked in the parking spot 151a on the parking lot 151, while the vehicle 20 is parked in the parking spot 151c on the parking lot 151; both awaiting to enter and be serviced inside the workshop 150. As the vehicles 10, 20 are parked on the parking spots 151a and 151c outside the workshop 150, a maintenance or repair technician and/or workshop personnel may temporarily arrange one or more of the gas leakage sensors, e.g. the gas leakage sensors 121 and 122, on or at each of the vehicles 10, 20, respectively. This may be performed in order to be able to determine if there is a gas leak from any of the vehicles 10, 20 even before any of the vehicles 10, 20 enters the workshop 150 to be serviced. In some embodiments, the locations of each of the one or more gas leakage sensors 121 and 122 may be pre-set or configured in control unit 110, such that, for example, the maintenance or repair technician always positions the same gas leakage sensor 121 on a vehicle 10 parked in the parking spot 151a and the same gas leakage sensor 122 on a vehicle 20 parked in the parking spot 151c. In some cases, each of the one or more gas leakage sensor 121, 122, 123, 124 may be color-coded or marked with its intended location, e.g. one of the parking spots 151a-151c, in order to assist the maintenance or repair technician in positioning each of the one or more gas leakage sensor 121, 122, 123, 124 at its intended location. Alternatively, in some embodiments, each of the one or more gas leakage sensor 121, 122, 123, 124 may comprise a Global Positioning System/Global Navigation Satellite System, GPS/GNSS, unit or module, such as, e.g. the GPS module 613 shown in Fig. 6. This enables each of the one or more gas leakage sensors 121, 122, 123 to determined its location, which e.g. may be associated with one of the parking spots 151a-151c. For example, as illustrated the scenario in Fig. 2, each of the gas leakage sensors 121 and 122 may determine its location based on GPS/GNSS signalling from a GPS satellite 140.

The vehicle 30 on the other hand is currently located in the workshop 150 and is being serviced in working bay 150a inside the workshop 150. The maintenance or repair technician and/or workshop personnel may temporarily arrange one or more of the gas leakage sensors, e.g. the gas leakage sensor 123, on the vehicles 30. Inside the workshop 150, the additional gas leakage sensors 141, 142, 143, 144 may be arranged at different fixed locations for detecting any gas leakage inside workshop 150. The fixed locations of each of the additional gas leakage sensors 141, 142, 143, 144 may be known and predetermined in the alarm system, e.g. in one or more of the control units 110, 111.

Hence, the control unit 110 may, upon receiving information from any of the one or more gas leakage sensor 121, 122, 123 and the additional gas leakage sensors 141, 142, 143, 144 indicating that a gas leakage has been detected, generate an alarm signal indicating the location of the gas leakage by having identified the location associated with the gas leakage sensor detecting the gas leakage. By accurately being able to indicate the location of the gas leak inside or outside the workshop 150, maintenance or repair technician and/or workshop personnel may be directed towards the most suitable exits/entries of the workshop, e.g. farthest away from the gas leak, and may provide a safer and faster evacuation.

Examples of embodiments of a method in an alarm system for detecting a gas leakage from a vehicle 10, 20, 30, wherein the alarm system comprises a control unit 110 and one or more gas leakage sensors 121-124 configured to be temporarily arranged on or at the vehicle 10, 20, 30, will now be described with reference to the flowchart depicted in **Fig. 4**. Fig. 4 is an illustrated example of actions, steps or operations which may be performed by the control unit 110 in the alarm system as described above with reference to Figs. 1-3. The method may comprise the following actions, steps or operations.

**Action 401.** Initially, the control unit 110 may establish a wireless connection with the one or more gas leakage sensors 121-124. This means that the control unit 110 may be paired with the one or more gas leakage sensors 121-124 and be enable communicate with each other. This so-called pairing is useful to integrate the one or more gas leakage sensors 121-124 in a wireless network either provided by the control unit 110 or a wireless network to which the control unit 110 is connected. In some cases, it is also useful in order to ensure that the control unit 110 is aware of which of the one or more gas leakage sensors 121-124 are located on which vehicle 10, 20, 30. The wireless connection may here be established via a telecommunication network, e.g. 4G/5G/6G network, or via a smaller local Internet-of-Things (loT) network, Bluetooth connection or local WiFi network, etc. In some cases, the wireless connection may be established via a wireless network may be a Zigbee/Thread network based on IEEE 802.15.4.

In some embodiments, the pairing may be performed by, for example, a QR code or via Radio Frequency Identification/Near-field Communications (RFID/NFC) that associate the one or more gas leakage sensors 121-124 to a particular vehicle 10, 20, 30. Optionally, in case of using Bluetooth, the built-in pairing capability incorporated therein may be used. It should be noted that the one or more gas leakage sensors 121-124 may actually technically be associated to the location of the vehicle 10, 20, 30, rather than to the actual vehicle 10, 20, 30. In some embodiments, the pairing may be performed by a QR code or via RFID/NFC or Bluetooth that associate the one or more gas leakage sensors 121-124 to a location in a workshop 150, such as, e.g. one of the working bays 150a, 150b, 150c shown in Fig. 3. Here, in some embodiments, a QR code reader, RFID/NFC reader or Bluetooth-capable device may be either a dedicated device (e.g. a diagnostic tool or computer) or a smartphone/laptop, communicating with the control unit 110 and/or the alarm system comprising the control unit 110. In some embodiments, the alarm system, of which the control unit 110 is a part of, may centrally comprise a complete registry of all of the one or more gas leakage sensors 121-124.

**Action 402.** The control unit 110 obtains information indicating locations 121a-124a of the one or more gas leakage sensors 121-124 while temporarily arranged on or at the vehicle 10. This means, for example, that the control unit 110 may access information that allows it to identify the current location of the one or more gas leakage sensors 121-124 as the one or more gas leakage sensors 121-124 are temporarily mounted on one or more of the vehicles 10, 20, 30.

In some embodiments, the control unit 110 may retrieve the information from stored information. For example, the control unit 110 may be configured to retrieve the information indicating locations 121a-124a of the one or more gas leakage sensors 121-124 from a memory, such as, the memory 520 shown in Fig. 5, or from a central registry (not shown) in the alarm system in which all of the one or more gas leakage sensors 121-124 are registered. In this case, according to some embodiments, the stored information retrieved by the control unit 110 comprises pre-set, scanned or manually inputted information indicating the temporary locations 121a-124a of the one or more gas leakage sensors 121-124.

Optionally, the control unit 110 may receive the information from the one or more gas leakage sensors 121-124 using the established wireless connection at start-up, on demand, at determined intervals, and/or continuously in real-time using the established wireless connection. In this case, the one or more gas leakage sensors 121-124 may determine its location based on, for example, GPS/GNSS/Galileo signalling, other positioning signalling, triangulation or similar location techniques within a wireless network. The one or more gas leakage sensors 121-124 may then transmit this information to the control unit 110, e.g. at start-up, on demand, at determined intervals, and/or continuously in real-time using the established wireless connection.

**Action 403.** After obtaining the information in Action 402, the control unit 110 identifies, upon generate a warning alert signal in the alarm system, the location 124a of a gas leakage sensor 121-124 based on the obtained information as the gas leakage sensor 121-124 detects a gas leakage. This means that the control unit 110 may immediately identify location of the gas leakage, or in some cases the vehicle having the gas leakage, upon generating an alarm signal. This such that an early and accurate gas leak warning may be given to maintenance or repair technicians and/or workshop personnel working on, or in the vicinity of, a vehicle in which a gas leakage has occurred.

**Action 404.** After the identification in Action 403, the control unit 110 may indicate the location 121a-124aof the gas leakage sensor 121-124 in the warning alert signal in the alarm system. This advantageously enables the control unit 110 to indicate the location of the gas leakage sensor, e.g. the gas leakage sensor 121-124, that has detected a gas leakage. For example, the alarm signal may comprise a pre-recorded or generated voice message indicating the location of the gas leakage sensor, e.g. "Gas leakage detected in parking lot #3", "Gas leakage detected in the front of the vehicle", etc.

To perform the method actions for detecting a gas leakage from a vehicle 10, 20, 30, the alarm system may comprise the following arrangements depicted in **Figs. 5-6**. Here, the alarm system comprises a control unit 110 and one or more gas leakage sensors 121-124 configured to be temporarily arranged on or at the vehicle 10, 20, 30. Fig. 5 shows a schematic block diagram of embodiments of the control unit 110, while Fig. 6 shows a schematic block diagram of embodiments of the one or more gas leakage sensors 121-124. It should also be noted that, although not shown in Figs. 5-6, known conventional features for operating the control unit 110 and the one or more gas leakage sensors 121-124, such as, for example, a connection to a power source, e.g. a battery, rechargeable battery, the mains, or other power source, may be assumed to be comprised in the control unit 110 and the one or more gas leakage sensors 121-124, but is not shown or described in any further detail in regards to Figs. 5-6.

Both the control unit 110 and the one or more gas leakage sensors 121-124 may comprise a **receiving module 511, 611** and a **transmitting module 611, 612**, respectively. The receiving module and transmitting modules 511, 611, 611, 612 may comprise Radio Frequency, RF, circuitry and baseband processing circuitry capable of transmitting and receiving a radio signal in a wireless communications network 100, such as, e.g. a 4G/5G/6G network. Optionally, receiving module and transmitting module 511, 611, 611, 612 may comprising circuitry capable of transmitting and receiving signals via a smaller local Internet-of-Things (loT) network, Bluetooth connection or local WiFi network, etc. For example, a Zigbee/Thread wireless network based on IEEE 802.15.4. Here, it should also be noted that the receiving module and transmitting modules 511, 611, 611, 612 may also form part of a single transceiver.

Furthermore, as shown in Fig. 5, the control unit 110 may comprise **processing circuitry 510** and a **memory 520**. It should also be noted that some or all of the functionality described in the embodiments above as being performed by the control unit 110 may be provided by the processing circuitry 510 executing instructions stored on a computer-readable medium, such as, e.g. the memory 520 shown in Fig. 5. Alternative embodiments of the control unit 110 may comprise additional components, such as, for example, an **establishing module 513**, an **obtaining module 514**, an **identifying module 515**, and an **indication module 516**, whereby each module may be configured and responsible for providing its dedicated functionality to support the embodiments described herein.

The control unit 110 or processing circuitry 510 is configured to, or may comprise the obtaining module 514 being configured to, obtain information indicating locations 121a-124a of the one or more gas leakage sensors 121-124 while temporarily arranged on or at the vehicle 10, 20, 30. Also, the control unit 110 or processing circuitry 510 is configured to, or may comprise the identifying module 515 being configured to, upon generate a warning alert signal in the alarm system, identify the location 121a-124a of a gas leakage sensor 121-124 based on the obtained information as the gas leakage sensor 121-124 detects a gas leakage. Further, the control unit 110 or processing circuitry 510 may be configured to, or may comprise the indicating module 516 being configured to, indicate the location 121a-124a of the gas leakage sensor 121-124 in the warning alert signal in the alarm system. In some embodiments, the control unit 110 or processing circuitry 510 is configured to, or may comprise the identifying module 515 being configured to, establish a wireless connection with the one or more gas leakage sensors 121-124. Here, the control unit 110 or processing circuitry 510 is configured to, or may comprise the receiving module 611 being configured to, receive information indicating locations 121a-124a of the one or more gas leakage sensors 121-124 from the one or more gas leakage sensors 121-124 at start-up and/or continuously in real-time using the established wireless connection.

According to some embodiments, the control unit 110 or processing circuitry 510 is configured to, or may comprise the obtaining module 514 being configured to, retrieve the information from stored information. For example, the control unit 110 may be configured to retrieve the information indicating locations 121a-124a of the one or more gas leakage sensors 121-124 from a memory or digital storage, such as, the memory 520 or from a central registry in the alarm system in which all of the one or more gas leakage sensors 121-124 are registered. Here, according to some embodiments, the stored information retrieved by the control unit 110 comprises pre-set, scanned or manually inputted information indicating the locations 121a-124a of the one or more gas leakage sensors 121-124. Optionally, the control unit 110 or processing circuitry 510 is configured to, or may comprise the receiving module 514 being configured to, receive the information from the one or more gas leakage sensors 121-124 using the established wireless connection at start-up, on demand, at determined intervals, and/or continuously in real-time using the established wireless connection. Further, in some embodiments, the detected gas leakage is vehicle fuel gas, wherein the vehicle fuel gas is one of: Compressed Natural Gas, CNG; Liquid Natural Gas, LNG; Liquefied Petroleum Gas, LPG; or Hydrogen, H₂.

Similarly, as shown in Fig. 6, each of the one or more gas leakage sensors 121-124 may comprise **processing circuitry 610** and a **memory 620**. It should also be noted that some or all of the functionality described in the embodiments above as being performed by each of the one or more gas leakage sensors 121-124 may be provided by the processing circuitry 610 executing instructions stored on a computer-readable medium, such as, e.g. the memory 620 shown in Fig. 6. Alternative embodiments of the one or more gas leakage sensors 121-124 may comprise additional components, such as, for example, a **GPS module 613**. Here, in some embodiments, the one or more gas leakage sensors 121-124 or processing circuitry 610 may be configured to, or comprise the GPS module 613 being configured to, determine its location based on GPS/GNSS signalling, other positioning signalling or triangulation. Optionally, the location of the one or more gas leakage sensors 121-124 may be pre-set, scanned or manually inputted into the alarm system being accessible for the control unit 110 to retrieve.

The one or more gas leakage sensors 121-124 in the alarm system may further comprise a **gas detection module 630**, a **light module 640**, an **alarm module 650**, and a **display module 660**. The gas detection module 660 is capable of detecting if a gas concentration is above a determined threshold value, i.e. detect a gas leak. Here, in some embodiments, the one or more gas leakage sensors 121-124 or processing circuitry 610 may be configured to, or comprise the transmitting module 612 being configured to, transmit the current gas concentration detected by the gas detection module 660 to the control unit 110. Also, the determined threshold value may arranged to be configured by the control unit 110.

In case a gas leak is detected, the light module 640 and an alarm module 650 may emit a flashing/blinking light and a warning signal (e.g. predetermined warning message) or alarm sound (e.g. a high dB-signal). For example, the light module 640 may also be configured to indicate if the gas concentration is close or above a threshold limit, e.g. by using different colour levels. Also, the alarm module 650 may be configured to indicate if the gas concentration is close or above a threshold limit, e.g. by using different sound levels or warning messages. The display module 660 may be configured to indicate and display the current gas concentration, e.g. current H₂ concentration detected. The display module 660 may further be configured to indicate if the gas concentration is close or above a threshold limit, e.g. by displaying different messages/colours, etc.

It should also be noted that the one or more gas leakage sensors 121-124 in the alarm system may be configured to be temporarily arranged on or at the vehicle 10, 20, 30 by a detachable or releasable arrangement. In some embodiments, the detachable or releasable arrangement of each of the one or more gas leakage sensor 121-124 comprise one or more of: a magnetic retention means, a suction retention means, or a fastening means.

Furthermore, the embodiments for detecting a gas leakage from a vehicle 10, 20, 30 described above may be at least partly implemented through one or more processors, such as, the processing circuitry 510 in the control unit 110 depicted in Fig. 5 and the processing circuitry 610 in the one or more gas leakage sensors 121-124 depicted in Fig. 6, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 510 in the control unit 110 and/or the processing circuitry 610 in the one or more gas leakage sensors 121-124. The data carrier, or computer readable medium, may be one of an electronic signal, optical signal, radio signal or computer-readable storage medium. The computer program code may e.g. be provided as pure program code in the control unit 110 and/or the one or more gas leakage sensors 121-124 or on a server and downloaded to the control unit 110 and/or the one or more gas leakage sensors 121-124. Thus, it should be noted that the functions of the control unit 110 and/or the one or more gas leakage sensors 121-124 may in some embodiments be implemented as computer programs stored in memory 520, 620 in Figs. 5-6, e.g. a computer readable storage unit, for execution by processors or processing modules, e.g. the processing circuitry 510 in the control unit 110 depicted in Fig. 5 and the processing circuitry 610 in the one or more gas leakage sensors 121-124 depicted in Fig. 6.

Those skilled in the art will also appreciate that the processing circuitries 510, 610 and the memory 520, 620 described above may refer to a combination of analog and digital circuits, and/or one or more processors configured with software and/or firmware, e.g. stored in a memory, that when executed by the one or more processors such as the processing circuitries 510, 610 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems and computer program products. It should be appreciated that the example embodiments presented herein may be practiced in any combination with each other. It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures and program modules represent examples of program code for executing steps of the methods disclosed herein. The particular sequence of such executable instructions or associated data structures represents examples of corresponding acts for implementing the functions described in such steps or processes. The embodiments herein are not limited to the above described preferred embodiments. Various alternatives, modifications and equivalents may be used. Therefore, the above embodiments should not be construed as limiting.

## Claims

1. An alarm system for detecting a gas leakage from a vehicle (10, 20, 30), the alarm system comprising a control unit (110) and one or more gas leakage sensors (121-124) configured to be temporarily arranged on or at the vehicle (10, 20, 30), wherein the control unit (110) is arranged to
obtain information indicating locations (121a-124a) of the one or more gas leakage sensors (121-124) while temporarily arranged on or at the vehicle (10, 20, 30), and
upon generate a warning alert signal in the alarm system, identify the location (121a-124a) of a gas leakage sensor (121-124) based on the obtained information as the gas leakage sensor (121-124) detects a gas leakage.

2. The alarm system according to claim 1, wherein the control unit (110) is further arranged to indicate the location (121a-124a) of the gas leakage sensor (121-124) in the warning alert signal in the alarm system.

3. The alarm system according to claim 1 or 2, wherein the control unit (110) is arranged to establish a wireless connection with the one or more gas leakage sensors (121-124).

4. The alarm system according to any of claims 1-3, wherein the control unit (110) is further arranged to retrieve the information from stored information, or receive the information from the one or more gas leakage sensors (121-124) using the established wireless connection at start-up, on demand, at determined intervals, and/or continuously in real-time using the established wireless connection.

5. The alarm system according to claim 4, wherein the stored information retrieved by the control unit (110) comprises pre-set, scanned or manually inputted information indicating the locations (121a-124a) of the one or more gas leakage sensors (121-124).

6. The alarm system according to any of claims 1-5, wherein the one or more gas leakage sensors (121-124) are configured to be temporarily arranged on or at the vehicle (10, 20, 30) by a detachable or releasable arrangement.

7. The alarm system according to claim 6, wherein the detachable or releasable arrangement of each of the one or more gas leakage sensor (121-124) comprise one or more of: a magnetic retention means, a suction retention means, or a fastening means.

8. The alarm system according to any of claims 1-7, wherein the detected gas leakage is vehicle fuel gas, wherein the vehicle fuel gas is one of: Compressed Natural Gas, CNG; Liquid Natural Gas, LNG; Liquefied Petroleum Gas, LPG; or Hydrogen, H₂.

9. A method in an alarm system for detecting a gas leakage from a vehicle (10, 20, 30), wherein the alarm system comprises a control unit (110) and one or more gas leakage sensors (121-124) configured to be temporarily arranged on or at the vehicle (10, 20, 30), the method comprises
*obtaining* (402) information indicating locations (121a-124a) of the one or more gas leakage sensors (121-124) while temporarily arranged on or at the vehicle (10, 20, 30); and
*identifying* (403), upon generate a warning alert signal in the alarm system, the location (121a-124a) of a gas leakage sensor (121-124) based on the obtained information as the gas leakage sensor (121-124) detects a gas leakage.

10. The method according to claim 9, further comprising
*indicating* (404) the location (121a-124a) of the gas leakage sensor (121-124) in the warning alert signal in the alarm system.

11. The method according to claim 9 or 10, further comprising
*establishing* (401) a wireless connection with the one or more gas leakage sensors (121-124).

12. The method according to any of claims 9-11, wherein the *obtaining* (402) comprises retrieving the information from stored information, or receiving the information from the one or more gas leakage sensors (121-124) using the established wireless connection at start-up, on demand, at determined intervals, and/or continuously in real-time using the established wireless connection.

13. The method according to claim 12, wherein the stored information retrieved by the control unit (110) comprise pre-set, scanned or manually inputted information indicating the temporary locations (121a-124a) of the one or more gas leakage sensors (121-124).

14. A computer program product comprising program code means for performing the steps of any of claims 9-13 when said program is run on a computer or on processing circuitry of a control unit (110) in an alarm system according to any of claim 1-8.

15. A computer program carrier carrying a computer program product according to claim 14, wherein the computer program carrier is one of an electronic signal, optical signal, radio signal, or computer-readable storage medium.
